# EUROPEAN PATENT SPECIFICATION

(11) **EP 2 404 810 B1**
(45) Date of publication and mention of the grant of the patent: **14.11.2012**
(21) Application number: 10168426.4
(22) Date of filing: 05.07.2010
(51) Int. Cl.: B62D 21/02

(54) **Reinforcement member for a draw beam, and a draw beam with such a reinforcement member**
Verstärkungselement für eine Zugstange und eine Zugstange mit einem solchen Verstärkungselement
Élément de renfort pour poutre de traction et poutre de traction dotée d'un tel élément de renfort

(43) Date of publication of application: 11.01.2012
(73) Proprietor: VBG Group AB (Publ), 462 28 Vänersborg (SE)
(72) Inventor: Johansson, Stefan, 468 33, Vargön (SE)
(74) Representative: Edlund, Fabian

(56) References cited:
- EP-A1- 0 800 936
- EP-A1- 1 932 690
- EP-B1- 1 272 366

## Description

### FIELD OF THE INVENTION

The present invention relates to a reinforcement member for a draw beam for mounting of a coupling device. The invention also relates to a draw beam provided with such a reinforcement member. In particular, the present invention relates to such a draw beam intended for use on a heavy towing vehicle.

### BACKGROUND OF THE INVENTION

Conventional draw beams for mounting a coupling device generally comprise a web with a centrally positioned hole, in which the neck portion of the coupling device is received. Typically, mounting of a coupling device is performed by first attaching a mounting plate on the inner side of the draw beam web, then inserting the neck portion, and fixating the coupling device with a heavy nut threaded onto the neck portion. Obviously, the details of the mounting may be varied.

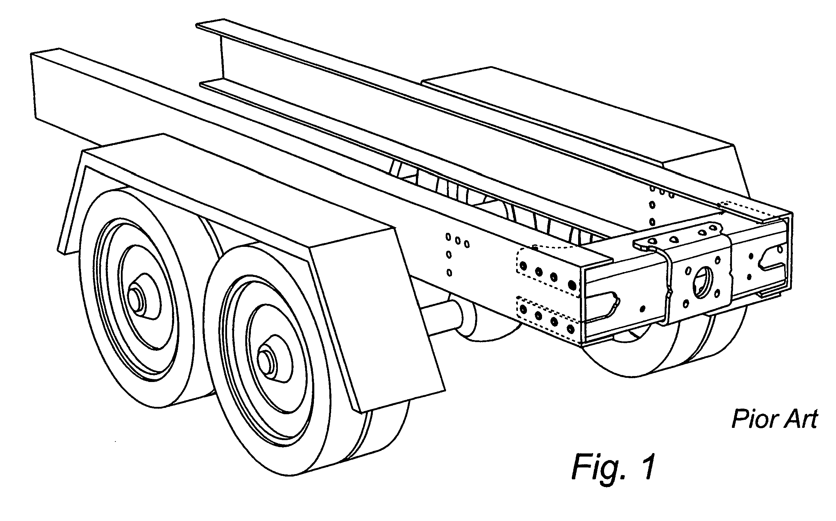

In order to provide further strength, especially in heavy vehicle applications, the draw beam is sometimes provided with a U-shaped reinforcement member. The reinforcement member is attached to the draw beam, so that it is in contact with the web and top and bottom walls of the draw beam (see figure 1). The reinforcement member is provided with a hole that is aligned with the hole in the web of the draw beam.

When a coupling is now mounted to the draw beam, the load from the coupling will be applied to the reinforcement member and the draw beam. The reinforcement member will also cause the load to be distributed over a larger area of the draw beam.

In order to provide optimal strength, the reinforcement should be arranged in close contact with the draw beam. As the reinforcement member extends across three sides of the beam, this requires a very exact fit. If the opening of the reinforcement member is just a little greater than the width of the beam, i.e. there is a play between the member and the beam, the reinforcement member will be subject to stress when it is firmly secured to the top and bottom walls of the beam. If the play is too large, it will not be possible to ensure a tight fit between the reinforcement member and draw beam. This may lead to lack of contact between the reinforcement member and draw beam, and consequently a reduced strength.

### SUMMARY OF THE INVENTION

It is the object of the present invention to mitigate this problem, and to enable fitting of a reinforcement member to a draw beam with less stress and improved contact.

According to a main aspect of the invention, this and other objects are achieved by a reinforcement member for a draw beam of the kind having a first and a second substantially parallel longitudinal walls and a web extending between the walls, the web having at least one opening for receiving a neck portion of a coupling device. The reinforcement member is adapted to be fitted closely to the walls and web, in order to distribute forces acting on the draw beam. The reinforcement member further comprises a first part having two sides, adapted to be aligned with the first wall and the web, respectively, when attached to the draw beam, and a second part having two sides, adapted to be aligned with the second wall and the web, respectively, when attached to the draw beam. The parts are formed so that, when they are attached to the draw beam, each part extends around at least a portion of a perimeter of the opening, and the parts are separated from each other in a transverse direction of the web.

According to another aspect, this and other objects are achieved by a draw beam for supporting a coupling device, comprising first and a second substantially parallel longitudinal walls, a web extending between the walls, the web having at least one opening for receiving a neck portion of the coupling device, and a reinforcement member according to the first aspect of the invention.

The invention is based on the surprising insight that dividing the reinforcement member into two parts will eliminate much of the stress created when attaching a U-shaped member to a draw beam, without causing any significant weakening of the function of the reinforcement element. An exemplary teaching is exposed in document EP-A-1932690, in accordance in the preamble factury of claim 10.

According to the invention, each part of the reinforcement member extends only along two sides of the draw beam, and in particular no part extends along opposite sides of the draw beam. This significantly reduces the risk of discarding reinforcement members due to misfit or misalignment with the draw beam. Further, each part can more easily be snugly fitted in contact with the draw beam. The separation of the two parts in the transverse direction of the web further allows for a certain play between them that can compensate any minor variation in the width of the web. Therefore, strain on the reinforcement member caused by such width variations can be avoided.

As each part is formed to be adjacent the hole in the web, a coupling device that is mounted to the draw beam will be in contact with each part, and pressure them against the web. The separation of the two parts will therefore not cause any significant weakening of the reinforced draw beam.

The first part may advantageously be formed to extend around substantially a first half of said opening, and said second part be formed to extend around substantially a second half of said opening. According to one embodiment, the opening is circular, and the first and second parts form semi-circles on either side of the opening. This design may provide a particularly strong reinforcement member.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.
Figure 1 shows a draw beam according to prior art.
Figure 2 is a perspective view of a draw beam with a reinforcement member according to a first embodiment of the present invention.
Figure 3 shows a draw beam with a reinforcement member according to a second embodiment of the present invention.
Figure 4 is a perspective, and partly exploded, view of a coupling mounted to the draw beam in figure 2.

### DETAILED DESCRIPTION

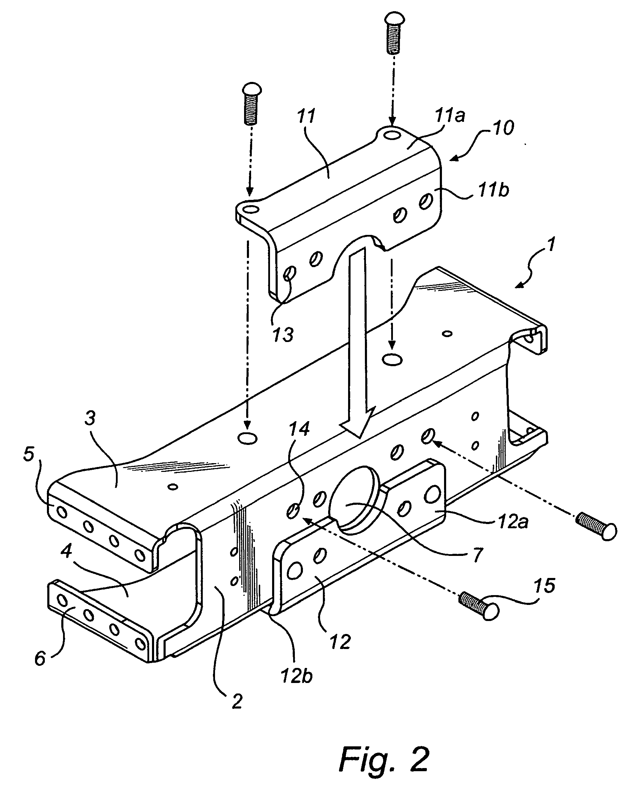

The draw beam 1 in figure 2 comprises a web 2, longitudinal walls 3, 4, and end flanges 5, 6. It is noted that the end flanges 5, 6 may be formed in a variety of ways, and are not of particular relevance for the present invention.

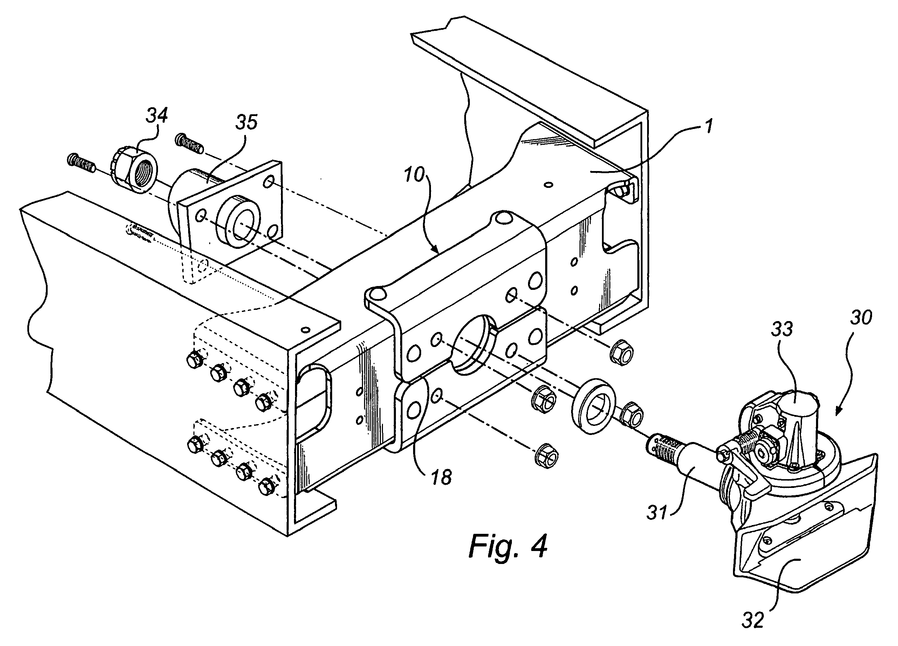

The web 2 has an opening 7, here located essentially centrally in the web, for receiving the neck portion of a coupling device mounted to the draw beam. The mounting of the coupling device will be described in more detail below, with reference to figure 4.

Surrounding the opening 7 is a reinforcement member 10, comprising two separate parts 11, 12. Each part is has two sides 11 a, 11b, 12a, 12b meeting each other at an angle corresponding to the angles formed by the web 2 and the two walls 3, 4. In other words, each part 11, 12 has an L-shaped cross section, formed to correspond to the outer surface of the beam where the web 2 meets one of the longitudinal walls 3, 4. The parts 11, 12 of the reinforcement member 10 can thus be fitted snugly against the draw beam 1.

Each part 11, 12 is further formed to extend around, and preferably coincide with, a portion of the perimeter of the opening 7. In the illustrated case, each part surrounds essentially half of the opening each. If the opening 7 is circular, like in the illustrated example, each part consequently forms a semi circle. However, the shape of the opening 7 may be different, and the extension of the parts 11, 12 may be unsymmetrical, so that one part extends around a greater portion of the opening perimeter than the second part.

Each part may further have a plurality of through holes 13 arranged to be aligned with corresponding through holes 14 in the web 2 and wall 3, 4 respectively, in order to enable attachment of the part 11, 12 using rivets 15, bolt, screws or similar fastening means. Optionally, the reinforcement member parts are attached only to the walls 3, 4 of the beam 1 and not to the web 2. Of course, other ways to attach the reinforcement member 10 may be used, such as welding.

Finally, each part may have a plurality of through holes 16, arranged to be aligned with corresponding through holes 17 in the web 2. These holes 16, 17 can be used for mounting a coupling device, as will be described below with reference to figure 4.

The two parts are separated from each other by a gap 18, extending across the web and intersecting the opening 7 (see figure 4). The width of this gap 18 can be in the range of a few mm up to a centimeter or more, and is preferably between 2 and 10 mm, e.g. 6 mm. In the illustrated example the gap 18 extends as a straight line, but it may alternatively be curved, bent, zigzag, etc. The purpose of the gap 18 is to allow a certain play between the parts 11, 12 against and away from each other (in the vertical direction, assuming an orientation as illustrated in figure 2).

Each part 11, 12 may be formed by cutting a flat blank to the desired shape, forming any through holes 13, and bending the blank to the desired shape. Of course, the holes may be formed after bending if this is preferable.

In the illustrated example, the two parts 11, 12 are identical, which may be advantageous from a manufacturing perspective, as it reduces the number of different parts. However, in some applications, it may be advantageous that the two parts have different shape, size or configuration. For example, as mentioned above, the extension of each part around the perimeter of the opening 7 may be different. Also, any through holes 13 for attaching the part to the draw beam may be different in number and location.

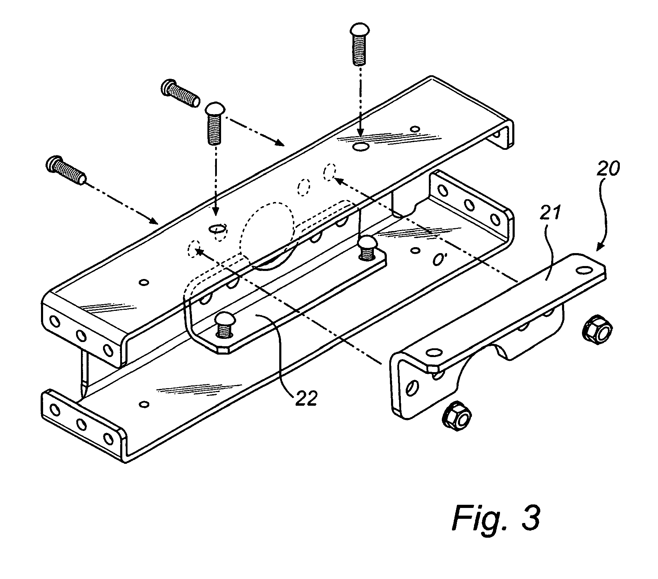

Figure 3 shows a draw beam 1 similar to the draw beam in figure 2, and its description will not be repeated. In this embodiment, however, the reinforcement member 20 is firmed to be placed on the inside of the draw beam 1, i.e. against the inner junction of the web 2 and walls 3, 4. This design requires a slightly different shape of the parts 21, 22. However, the main characteristics of the parts are the same. In particular, each part again has an L-shaped cross section, here formed to correspond to the shape of the inner surface of the draw beam 1 where the web meets the wall 3, 4.

Figure 4 shows how a coupling device 30 is mounted to a draw beam 1 provided with a reinforcement member 10 as shown in figure 2. The coupling device here comprises a neck portion 31 to be inserted into the opening 7, a coupling mouth 32, and a king pin operation unit 33. The neck portion can be threaded, in order to accommodate a likewise threaded nut 34.

When mounting the coupling device 30, a socket 35 may be attached to the draw beam 1 from the inside, e.g. using bolts or similar fasters through the holes 16, 17. The neck portion 31 of the coupling device can then be inserted into the socket 35, and the nut 34 can be secured on the threaded neck portion 31, thereby fixating the coupling device 30.

It is noted that the socket 35 only provides guidance for the neck portion 31 in the radial direction. In the axial direction, the web 2 of the draw beam 1 and the two parts 11, 12 of the reinforcement member 10 is sandwiched between the nut 34 and an abutment surface 36 of the coupling device 30.

It is noted that alternative means may be employed to fasten the coupling device in the axial direction, instead of the threaded neck portion 31 and the nut 34. However, in order to safely secure the coupling device 30 to the draw beam 1, force will be applied on either side of the web 2, thereby pressuring the two parts of the reinforcement member 10 and the web 2 together. This will ensure the reinforcing function of the reinforcement member 10, even when this is formed by two separate parts 11, 12.

The person skilled in the art realizes that the present invention by no means is limited to the preferred embodiments described above. On the contrary, many modifications and variations are possible within the scope of the appended claims. For example, the two reinforcement member parts are not necessarily identical. Also, the design of the draw beam may be different with respect to shape, number and placement of flanges, number and placement of through holes, etc.

## Claims

1. A reinforcement member (10) for a draw beam (1) of the kind having a first and a second substantially parallel longitudinal walls (3, 4) and a web (2) extending between the walls, said web (2) having at least one opening (7) for receiving a neck portion (31) of a coupling device (30),
said reinforcement member (10) being adapted to be fitted closely to said walls (3, 4) and web (2), in order to distribute forces acting on the draw beam (1),
**characterized in that** said reinforcement member (10) comprises:
a first part (11) having two sides (11 a, 11 b), adapted to be aligned with said first wall (3) and said web (2), respectively, when attached to the draw beam, and
a second (12) part having two sides (12a, 12b), adapted to be aligned with said second wall (4) and said web (2), respectively, when attached to the draw beam,
said parts (11, 12) are formed so that, when they are attached to the draw beam (1), each part (11, 12) extends around at least a portion of a perimeter of said opening (7), and said parts (11, 12) are separated from each other in a transverse direction of the web (2).

2. The reinforcement member (10) according to claim 1, wherein said first part (11) is formed to extend around substantially a first half of said opening (7), and said second part (12) extends around substantially a second half of said opening (7).

3. The reinforcement member (10) according to claim 1, wherein said first and second parts (11, 12) each comprises through holes (13) being adapted to be aligned with corresponding through holes (14) in the draw beam (1) and allowing attachment of said first and second parts (11, 12) to said draw beam (1).

4. A draw beam (1) for supporting a coupling device (30), comprising:
first and a second substantially parallel longitudinal walls (3, 4),
a web (2) extending between the walls, said web (2) having at least one opening (7) for receiving a neck portion (31) of the coupling device (30), and
a reinforcement member (10) according to one of claims 1 - 3.

5. The draw beam according to claim 4, wherein said opening (7) is circular, and said first and second parts (11, 12) form semi-circles on either side of said opening (7).

6. The draw beam according to claim 4, wherein said first and second parts (11, 12) each comprises through holes (13) being aligned with corresponding through holes (14) in the draw beam (1) and wherein said first and second parts (11, 12) are attached to said draw beam (1) by means of fasteners (15) extending through said through holes (13, 14).

7. The draw beam according to any one of claims 4-6, wherein said first and second parts (11, 12) are attached only to the walls (3, 4) of the draw beam (1).

## Patentansprüche

1. Verstärkungselement (10) für eine Zugstange (1) der Art, die eine erste und eine zweite, sich im Wesentlichen parallel erstreckende, längsgerichtete Wandung (3, 4) und einen Steg (2) aufweist, der sich zwischen den Wandungen erstreckt, wobei der Steg (2) mindestens eine Öffnung (7) zur Aufnahme eines Ansatzabschnittes (31) einer Kupplungsvorrichtung (30) aufweist,
wobei das Verstärkungselement (10) dafür eingerichtet ist, an den Wandungen (3, 4) und dem Steg (2) angelegt zu sein, um auf die Zugstange (1) wirkende Kräfte zu verteilen,
**dadurch gekennzeichnet, dass** das Verstärkungselement (10) Folgendes umfasst:
ein erstes Teil (11), das zwei Seiten (11 a, 11 b) aufweist und dafür eingerichtet ist, an der ersten Wandung (3) beziehungsweise am Steg (2) ausgerichtet zu sein, wenn es an der Zugstange angebracht ist, und
ein zweites Teil (12), das zwei Seiten (12a, 12b) aufweist und dafür eingerichtet ist, an der zweiten Wandung (4) beziehungsweise am Steg (2) ausgerichtet zu sein, wenn es an der Zugstange angebracht ist,
wobei die Teile (11, 12) derart gebildet sind, dass sich jedes Teil (11, 12), wenn es an der Zugstange (1) angebracht ist, um mindestens einen Abschnitt des Außenumfanges der Öffnung (7) erstreckt und die Teile (11, 12) in Querrichtung zum Steg (2) voneinander getrennt sind.

2. Verstärkungselement (10) nach Anspruch 1, wobei das erste Teil (11) derart gebildet ist, dass es sich im Wesentlichen um eine erste Hälfte der Öffnung (7) erstreckt, und sich das zweite Teil (12) im Wesentlichen um eine zweite Hälfte der Öffnung (7) erstreckt.

3. Verstärkungselement (10) nach Anspruch 1, wobei das erste und das zweite Teil (11, 12) jeweils Durchgangsöffnungen (13) umfassen, die dafür eingerichtet sind, an entsprechenden Durchgangsöffnungen (14) in der Zugstange (1) ausgerichtet zu sein, und das Anbringen des ersten und des zweiten Teils (11, 12) an der Zugstange (1) erlauben.

4. Zugstange (1) zum Abstützen einer Kupplungsvorrichtung (30), Folgendes umfassend:
eine erste und eine zweite, sich im Wesentlichen parallel erstreckende, längsgerichtete Wandung (3, 4),
einen Steg (2), der sich zwischen den Wandungen erstreckt, wobei der Steg (2) mindestens eine Öffnung (7) zur Aufnahme eines Ansatzabschnittes (31) der Kupplungsvorrichtung (30) aufweist, und
ein Verstärkungselement (10) nach einem der Ansprüche 1 bis 3.

5. Zugstange nach Anspruch 4, wobei die Öffnung (7) kreisrund ist und das erste und das zweite Teil (11, 12) an jeder Seite der Öffnung (7) einen Halbkreis bilden.

6. Zugstange nach Anspruch 4, wobei das erste und das zweite Teil (11, 12) jeweils Durchgangsöffnungen (13) umfassen, die an entsprechenden Durchgangsöffnungen (14) in der Zugstange (1) ausgerichtet sind und wobei das erste und das zweite Teil (11, 12) mit Hilfe von Befestigungsmitteln (15) an der Zugstange (1) angebracht sind, die sich durch die Durchgangsöffnungen (13, 14) erstrecken.

7. Zugstange nach einem der Ansprüche 4 bis 6, wobei das erste und das zweite Teil (11, 12) nur an den Wandungen (3, 4) der Zugstange (1) angebracht sind.

## Revendications

1. Elément de renfort (10) pour poutre de traction (1) du type présentant des première et seconde parois longitudinales essentiellement parallèles (3, 4) et une âme (2) s'étendant entre les parois, ladite âme (2) présentant au moins une ouverture (7) pour recevoir une partie de collet (31) d'un dispositif de couplage (30),
l'élément de renfort (10) étant adapté pour être ajusté étroitement sur les parois (3, 4) et l'âme (2), afin de répartir les forces agissant sur la poutre de traction (1),
**caractérisé en ce que** l'élément de renfort (10) comprend :
une première partie (11) présentant deux côtés (11 a, 11 b), adaptés pour être alignés avec la première paroi (3) et l'âme (2), respectivement, lorsqu'elle est fixée à la poutre de traction, et
une seconde (12) partie présentant deux côtés (12a, 12b), adaptés pour être alignés avec la seconde paroi (4) et l'âme (2), respectivement, lorsqu'elle est fixée à la poutre de traction,
les parties (11, 12) sont formées de façon à ce que lorsqu'elles sont fixées à la poutre de traction (1), chaque partie (11, 12) s'étende autour d'au moins une partie d'un périmètre de l'ouverture (7), et les parties (11, 12) sont séparées l'une de l'autre dans une direction transversale de l'âme (2).

2. Elément de renfort (10) selon la revendication 1, dans lequel la première partie (11) est formée pour s'étendre autour d'essentiellement une première moitié de l'ouverture (7), et la seconde partie (12) s'étend autour d'essentiellement une seconde moitié de l'ouverture (7).

3. Elément de renfort (10) selon la revendication 1, dans lequel les première et seconde parties (11, 12) comprennent chacune des trous traversants (13) adaptés pour être alignés avec des trous traversants correspondants (14) dans la poutre de traction (1) et permettant la fixation des première et seconde parties (11, 12) sur la poutre de traction (1).

4. Poutre de traction (1) pour supporter un dispositif de couplage (30), comprenant:
des première et seconde parois longitudinales essentiellement parallèles (3, 4),
une âme (2) s'étendant entre les parois, ladite âme (2) présentant au moins une ouverture (7) pour recevoir une partie de collet (31) du dispositif de couplage (30),
et un élément de renfort (10) selon l'une des revendications 1 à 3.

5. Poutre de traction selon la revendication 4, dans laquelle l'ouverture (7) est circulaire, et les première et seconde parties (11, 12) forment des demi-cercles sur chaque côté de l'ouverture (7).

6. Poutre de traction selon la revendication 4, dans laquelle les première et seconde parties (11, 12) comprennent chacune des trous traversants (13) alignés avec des trous traversants correspondants (14) dans la poutre de traction (1) et dans laquelle les première et seconde parties (11, 12) sont fixées à la poutre de traction (1) au moyen de fixations (15) s'étendant à travers les trous traversants (13, 14).

7. Poutre de traction selon l'une quelconque des revendications 4-6, dans laquelle les première et seconde parties (11, 12) sont fixées uniquement aux parois (3, 4) de la poutre de traction (1).
